(19) Europäisches Patentamt
European Patent Office
Office européen des brevets

(11) **EP 2 015 299 A2**

(12) **EUROPEAN PATENT APPLICATION**

(43) Date of publication:
**14.01.2009 Bulletin 2009/03**

(21) Application number: **08168056.3**

(22) Date of filing: **20.10.2005**

(51) Int Cl.:
*G11B 7/12* (2006.01)
*G02B 27/62* (2006.01)
*G02B 7/00* (2006.01)
*G11B 7/22* (2006.01)
*G11B 7/135* (2006.01)

(84) Designated Contracting States:
**DE FR GB**

(30) Priority: **14.12.2004 KR 20040105652**

(62) Document number(s) of the earlier application(s) in accordance with Art. 76 EPC:
**05256508.2 / 1 672 625**

(71) Applicant: **Samsung Electro-Mechanics Co., Ltd.
Suwon-si, Gyeonggi-do (KR)**

(72) Inventors:
  • **Cho, Eun-hyoung
    Seoul (KR)**
  • **Sohn, Jin-seung
    Seoul (KR)**
  • **Suh, Sung-dong
    Seoul (KR)**
  • **Jung, Mee-suk
    Gyeonggi-do (KR)**

(74) Representative: **Greene, Simon Kenneth
    Elkington and Fife LLP
    Prospect House
    8 Pembroke Road
    Sevenoaks, Kent TN13 1XR (GB)**

Remarks:
This application was filed on 31.10.2008 as a divisional application to the application mentioned under INID code 62.

(54) **Optical bench, integrated optical system, and optical alignment method**

(57) An optical bench, an integrated optical system, and an optical alignment method are provided. The integrated optical system includes a light source; a main photodetector receiving light that is emitted from the light source and then reflected from a disc; an optical bench on which the light source and the main photodetector are installed; a lens unit installed on the optical bench; and an optical path separator separating a path of light advancing from the light source to the lens unit and a path of light advancing from the lens unit, wherein the optical bench comprises a landing recess which is open upward to receive the optical path separator therein and which has an aperture on a bottom thereof to pass light.

FIG. 1A

**Description**

BACKGROUND OF THE INVENTION

The present invention relates to an optical bench, an integrated optical system, and an optical alignment method. More particularly, the present invention relates to an optical bench, an integrated optical system and an optical alignment method for easy assembly of optical elements and easy and simple optical alignment.

In an information recording/reproducing system which records information into and/or reproduces information from an information storage medium using a light spot obtained by focusing a laser beam on the information storage medium using an objective lens, information storage capacity is determined according to the size of the light spot. The size S of a light spot is defined as Equation 1 based on a wavelength, λ, of a laser beam and a numerical aperture NA of an objective lens:

$$S \propto \lambda / NA \qquad\qquad (1).$$

Accordingly, to reduce the size of a light spot formed on an information storage medium for high density, an information recording/reproducing system using a short-wavelength light source such as a blue laser and an objective lens having a NA of at least 0.6 has been researched and developed.

Since a compact disc (CD) which information is recorded onto and/or reproduced from using 780-nm wavelength light and an objective lens having a NA of 0.45 or 0.5 was developed, many studies have been performed to increase information storage capacity by increasing recording density. As a result, a digital versatile disc (DVD) which information is recorded onto and/or reproduced from using 650-nm wavelength light and an objective lens having a NA of 0.6 or 0.65 has been developed.

Studies on high-density information storage media that can have a storage capacity of at least 20 Gbytes by using a blue wavelength, e.g., 405-nm wavelength light, have been being performed.

At present, a standard for high-density information storage media using a blue wavelength, e.g., 405-nm wavelength light, is under construction. Some of the standard has been almost completed. According to the standard, an objective lens has a NA of 0.65 or 0.85 for the high-density information storage media.

While the thickness of a CD is 1.2 mm, the thickness of a DVD is reduced to 0.6 mm to secure tolerance in accordance with a tilt of an information storage medium. This is because an NA for the DVD is increased to 0.6 compared to an NA of 0.45 for the CD.

In addition, if the NA of an objective lens is increased to, for example, 0.85, for a high-density information storage medium having higher capacity than a DVD, the thickness of the high-density information storage medium needs to be reduced to about 0.1 mm. Such information storage media developed by increasing the NA of an objective lens and decreasing the thickness of an information storage medium are Blu-ray discs (BDs). In a BD standard, the wavelength of a light source is 405 nm, the NA of an objective lens is 0.85, and the thickness of an information storage medium is about 0.1 mm.

Besides BDs, advanced optical discs (AODs) are under development as high-density information storage media. The same substrate thickness and the same NA of an objective lens as those for a DVD and the same wavelength of a light source as that for a BD, i.e., a blue wavelength, e.g., a 405 nm wavelength are adopted for an AOD.

In the field of information recording/reproducing systems, in addition to such requirements of the high density and high capacity of information storage media, an entire optical system forming an optical pickup is required to be thinner and smaller. In other words, as usage of an information recording/reproducing system for portable terminals such as personal digital assistants (PDAs), mobile phones, digital cameras, portable disc players, and camcorders has increased recently, the need for a thin optical pickup has also increased. In addition, to adopt an optical pickup to the field of portable terminals, the optical pickup must be able to record and/or reproduce information at high density to store and reproduce a large amount of information like music and video.

However, conventional technology has reached a limit in manufacturing a small and thin optical pickup system by reducing the size of optical elements constituting an optical pickup used for CD/DVD drivers, CD/DVD players, etc. that are in the market at present.

Conventional optical pickups are manufactured through procedures of assembling and aligning a plurality of optical elements manufactured separately. During the assembly and alignment procedures, the optical elements are liable to be broken due to micro-miniaturization. Moreover, reliability and an automation rate are low due to assembly tolerance between the optical elements.

In order to manufacture micro optical pickups, it is needed to simplify the structure of a photodetector used for an optical pickup. However, if the structure of a photodetector is simplified, work of aligning optical elements becomes complicated. In other words, there is close correlation between optical alignment and realizing miniaturization of an optical pickup by simplifying the structure of a photodetector. Generally, optical elements are aligned using three-axis translation and two-axis tilt. In particular, when micro optical pickups are subjected to a complicated optical alignment operation in which optical elements are adjusted around diverse axes in a three-axis translation stage, a two-axis tilt stage, etc., an optical bench is frequently broken, causing optical alignment to be difficult.

SUMMARY OF THE INVENTION

According to an aspect of the present invention, there is provided an optical bench on which a light source, a main photodetector receiving light reflected from a disc, a lens unit, and an optical path separator separating light coming from the light source and light coming from the lens unit are installed, the optical bench including a landing recess which is open upward to receive the optical path separator therein and which has an aperture on a bottom thereof to pass light.

The optical bench may further include on a bottom surface thereof: a first mirror changing a direction of the light emitted from the light source toward the lens unit; and a second mirror changing a direction of light that has come from lens unit and then reflected from the first mirror toward the main photodetector.

According to another aspect of the present invention, there is provided an integrated optical system including: a light source; a main photodetector receiving light that is emitted from the light source and then reflected from a disc; an optical bench on which the light source and the main photodetector are installed; a lens unit installed on the optical bench; and an optical path separator separating a path of light advancing from the light source to the lens unit and a path of light advancing from the lens unit, wherein the optical bench comprises a landing recess which is open upward to receive the optical path separator therein and which has an aperture on a bottom thereof to pass light.

The lens unit may be an objective lens or a collimating lens.

The integrated optical system may further include an objective lens above the collimating lens so that the integrated optical system is used as a holographic module.

The lens unit may be a hybrid lens comprising a refractive lens and diffractive lens.

The integrated optical system may further include on a bottom surface of the optical bench a monitor photodetector detecting power of the light emitted from the light source.

The optical path separator may be one of a holographic optical element and a diffractive optical element.

According to still another aspect of the present invention, there is provided an optical alignment method for an integrated optical system, including: supporting an optical bench mounted with a lens unit with a first jig and adjusting a tilt of the optical bench using the first jig, thereby aligning the optical bench to an optical axis; and supporting a dummy optical path separator with a second jig and adjusting a tilt of the dummy optical path separator using the second jig, thereby preliminary aligning the dummy optical path separator to the optical axis, wherein the first jig and the second jig are set for tilt aligning of the integrated optical system.

The optical alignment method may further include supporting a dummy disc with a third jig and adjusting a tilt of the dummy disc, thereby preliminary aligning the dummy disc to the optical axis.

The optical alignment method may further include: replacing the dummy optical path separator with an optical path separator to be assembled; and translating the optical path separator.

The present invention provides an optical bench and an integrated optical system, which have improved structures for simplifying assembly work.

The present invention also provides an optical alignment method for simplifying optical alignment in an assembled state by preliminarily completing tilt alignment about an optical axis.

BRIEF DESCRIPTION OF THE DRAWINGS

The above and other features and advantages of the present invention will become more apparent by describing in detail exemplary embodiments thereof with reference to the attached drawings in which:

FIG. 1A is a perspective view of an integrated optical system including an optical bench according to an embodiment of the present invention;
FIG. 1B is a front view of the integrated optical system shown in FIG. 1A;
FIG. 2 illustrates an example of a lens unit used for the integrated optical system shown in FIG. 1A;
FIG. 3 illustrates an example in which the integrate optical system shown in FIG. 1A is used as a holographic module;
FIGS. 4A through 4C illustrates an optical alignment method for an integrated optical system, according to an embodiment of the present invention; and
FIG. 5 illustrates optical alignment through the translation of an optical path separator in the optical alignment method illustrated in FIGS. 4A through 4C.

DETAILED DESCRIPTION OF THE INVENTION

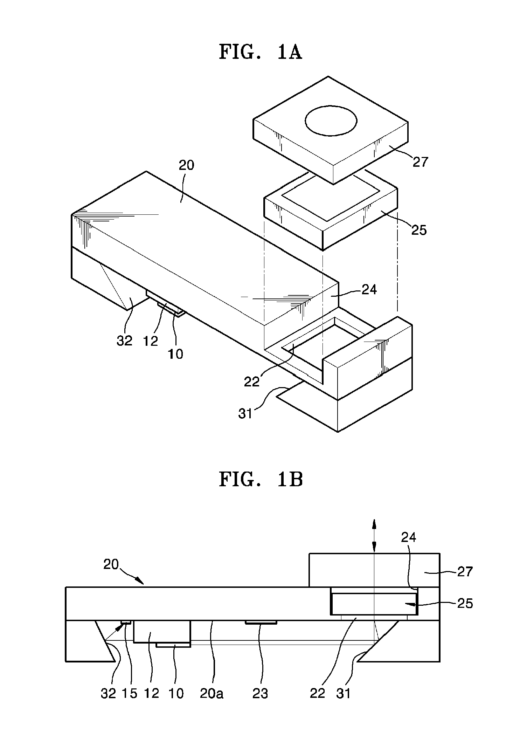

FIG. 1A is a perspective view of an integrated optical system including an optical bench according to an embodiment of the present invention. FIG. 1B is a front view of the integrated optical system shown in FIG. 1A.

Referring to FIGS. 1A and 1B, the integrated optical system includes a light source 10, an optical bench 20 mounted with a main photodetector 15, and an optical path separator 25 installed in a landing recess 24 formed in the optical bench to open upward.

The light source 10 may be implemented to emit light in diverse wavelength bands according to a type of information storage medium used in the integrated optical system. For example, the light source 10 may be implemented to emit red-wavelength light or blue-wavelength light or to emit light in plural wavelengths so that the light source 10 is compatible with diverse types of information storage media. Accordingly, information storage media adapting to an integrated optical system according to the present invention may be compact discs (CDs), digital versatile discs (DVDs), Blu-ray discs (BDs), and advanced optical discs (AODs).

The optical bench 20 may be a silicon opticalbench (SiOB). The light source 10, the main photodetector 15 receiving light emitted from the light source 10 and then reflected from an information storage medium, and a monitor photodetector 23 monitoring the power of light emitted from the light source 10 are mounted on a bottom surface 20a of the optical bench 20. The light source 10 may be implemented by an edge-emitting semiconductor laser emitting a laser beam to a side of a semiconductor material layer. In this case, the light source 10 is placed on a mount 12 and the monitor photodetector 23 is disposed in front of the light source 10 so that the monitor photodetector 23 receives part of the light emitted from the light source 10.

The main photodetector 15 receives light reflected from an information storage medium and detects an information playback signal and a focusing error signal, tracking error signal and tilt error signal for servo driving.

The optical path separator 25 is disposed in the landing recess 24 formed on one side of the optical bench 20 to open upward. An aperture 22 is formed on the bottom of the landing recess 23 to allow light pass therethrough. A lens unit 27 is mounted upward the landing recess 23.

The optical path separator 25 separates a path of light advancing from the light source 10 to the lens unit 27 and a path of light advancing from the lens unit 27. The optical path separator 25 may be implemented by a diffractive optical element or a holographic optical element.

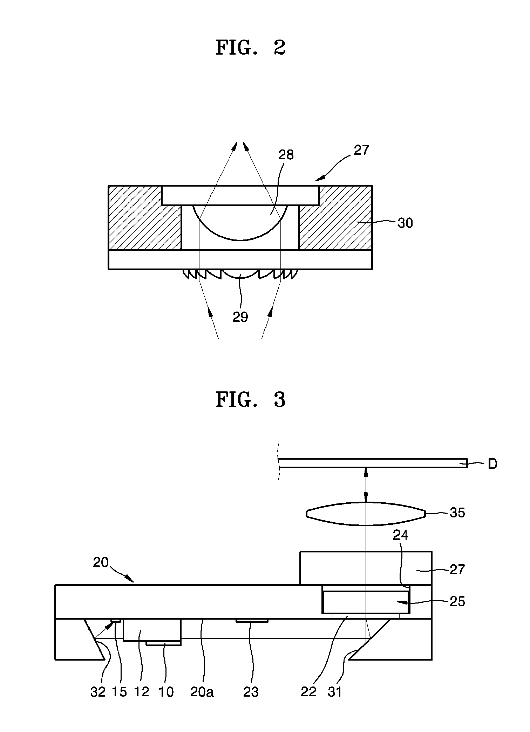

The lens unit 27 may be an objective lens focusing light on an information storage medium. In addition, the lens unit 27 may be a hybrid lens including a refractive lens 28 and a diffractive lens 29, as shown in FIG. 2. The refractive lens 28 is inserted into a lens holder 30 and the diffractive lens 29 is formed on one side of the lens holder 30. The refractive lens 28 having one convex side is easy to manufacture and the diffractive lens 29 compensates for chromatic aberration.

Meanwhile, a first mirror 31 is disposed at one side on the bottom surface 20a of the optical bench 20 to reflect light from the light source 10 to the optical path separator 25. A second mirror 32 is disposed at an opposite side on the bottom surface 20a to reflect light coming from the lens unit 27 via the optical path separator 25 and the first mirror 31 to the main photodetector 15.

The optical bench 20 according to an embodiment of the present invention is characterized by a structure in which the landing recess 24 for installation of the optical path separator 25 is open upward. This structure is advantageous in that the optical path separator 25 is assembled to the optical bench 20 just by putting the optical path separator 25 in the landing recess 24. Since an integrated optical system of the present invention has a micro size, an optical bench is liable to damage during assembly of optical elements to the optical bench, and therefore, the assembly may be very difficult. However, the optical bench 20 according to an embodiment of the present invention facilitates the assembly. In addition, conventionally, the lens unit 27 is assembled after the optical path separator 25 is provisionally bonded. However, in the structure according to an embodiment of the present invention, the provisional bonding of the optical path separator 25 is not required, thereby simplifying the assembly.

An integrated optical system according to an embodiment of the present invention may be used as an optical pickup or a holographic module according to the structure of the lens unit 27. The present invention provides a structure facilitating conversion between an optical pickup and a holographic optical module during manufacturing of an integrated optical system. Accordingly, an integrated optical system according to the present invention can be converted into an optical pickup or a holographic optical module as occasion demands. When the integrated optical system is used as an optical pickup, the lens unit 27 is implemented by an objective lens. FIG. 1B illustrates an example in which the integrated optical system is used as an optical pickup.

FIG. 3 illustrates an example in which the integrated optical system shown in FIG. 1A is used as a holographic optical module. Here, the lens unit 27 is implemented by a collimating lens and an objective lens 35 is disposed above the collimating lens. Light emitted from the light source 10 is output through the holographic module and is incident onto the objective lens 35 in parallel via the collimating lens. The light having passed through the objective lens 35 is focused on an information storage medium D and records data onto or reproduces data from the information storage medium D. In the structure shown in FIG. 3, only he objective lens 35 is driven by an actuator for focusing, tracking, and/or tilting.

The light reflected from the information storage medium D passes through the objective lens 35 and the lens unit 27 implemented by the collimating lens and is incident onto the optical path separator 25, which converts the path of the light. Then, the light is reflected by the first mirror 31 and reaches the second mirror 32 after avoiding the interference by the light source 10 and the mount 12. Thereafter, the light is reflected by the second mirror 32 and received by the main photodetector 15. As a result, information recorded in the information storage medium D is read and a focus, tracking, and/or tilt error is detected.

The following describes an optical alignment method for an integrated optical system according to an embodiment of the presentinvention. Here, beam tilt alignment has been preliimnally completed before the integrated optical system is assembled.

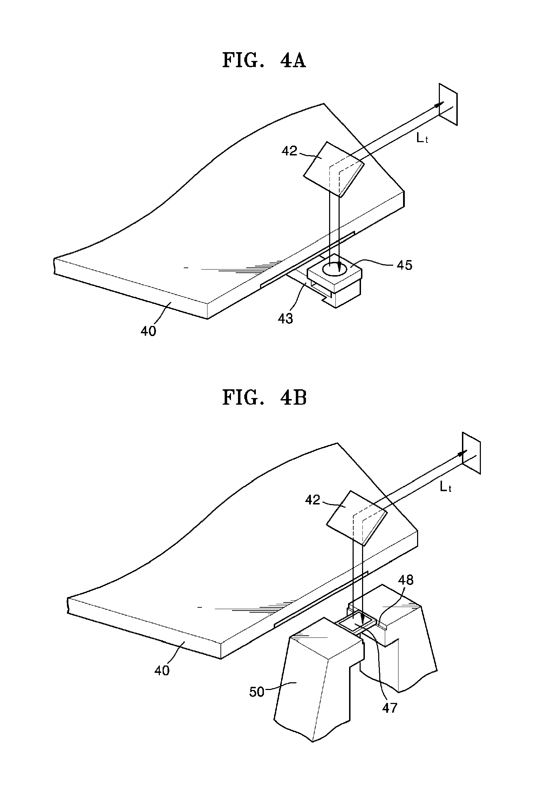

Referring to FIG. 4A, an optical bench 43 mounted with a lens unit 45 is supported by a first jig 40 and test light $L_t$ is radiated on the lens unit 45. A reflective mirror 42 may be further provided to transmit the test light $L_t$ to the lens unit 45. It is inspected whether the test light $L_t$ coming back after being reflected by the lens unit 45 is focused at a reference position. The reference position is defined such that the lens unit 45 is disposed to be orthogonal to an optical axis and is used to adjust a tilt with respect to the optical axis. The first jig 40 is adjusted so that the test light $L_t$ is focused at the reference position, thereby accomplishing optical alignment of the optical bench 43 mounted with the lens unit 45. The lens unit 45 is an element to be directly assembled to the integrated optical system. After tilt alignment of the lens unit 45, optical alignment of other elements are completed, and thereafter, the lens unit 45 is mounted on the first jig 40. Accordingly, assembly is simply accomplished.

Thereafter, as shown in FIG. 4B, a dummy optical path separator 47 is mounted on and supported by a holder48 formed at a second jig 50. The test light $L_t$ is radiated on the dummy optical path separator 47. It is inspected whether the test light $L_t$ coming back after being reflected is focused at the reference position. Next, the second jig 50 is adjusted so that the test light $L_t$ is focused at the reference position, thereby accomplishing preliminary optical alignment of the dummy optical path separator 47.

The dummy optical path separator 47 is an optical element used for preliminary tilt alignment. The second jig 50 is set for optical-axis alignment by using such dummy optical elements.

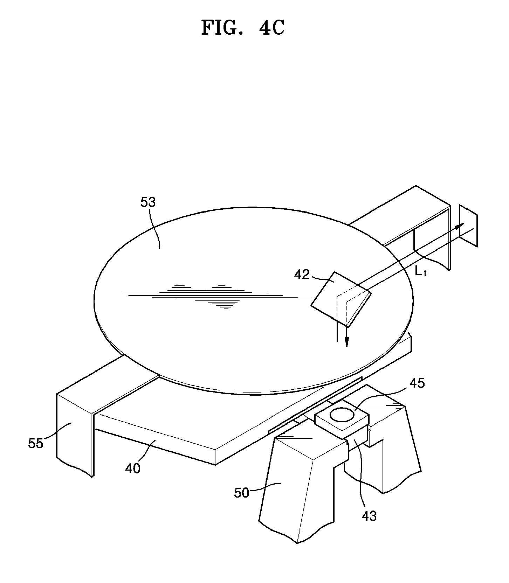

Next, as shown in FIG. 4C, a dummy disc 53 is mounted on a third jig 55 and the test light $L_t$ is radiated onto the dummy disc 53. It is inspected whether the test light $L_t$ coming back after being reflected from the dummy disc 53 is focused at the reference position. The third jig 55 is adjusted so that the test light $L_t$ is focused at the reference position, thereby accomplishing preliminary optical alignment of the dummy disc 53.

In the above description, optical alignment has been performed in order of the optical bench 43 mounted with the lens unit 45, the dummy optical path separator 47, and the dummy disc 53. However, the order of optical alignment may vary when necessary.

As described above, the first, second, and third jigs 40, 50, and 55 are set to be tilt aligned with respect to the optical axis by accomplishing optical alignment to the optical axis using the lens unit 45 and the dummy optical path separator 47. Thereafter, optical elements and real optical elements instead of dummy optical elements are mounted at the first, second, and third jigs 40, 50, and 55 and assembled. Here, the real optical elements will be denoted by the same reference numerals as those shown in FIGS. 1A and 1B.

The optical bench 20 mounted with the lens unit 27 is supported by the first jig 40 and the optical path separator 25 is supported by the second jig 50. Since the first and second jigs 40 and 50 have been tilt aligned about the optical axis, tilt alignment of optical elements is automatically accomplished simply by mounting the optical bench 20 mounted with the lens unit 27 and the optical path separator 25 on the first and second jigs 40and 50. In such state where optical-axis alignment with respect to a tilt has been accomplished, the position of a light spot formed on the main photodetector 15 can be easily adjusted just by aligning the optical path separator 25 using translation along X- and Y-axes.

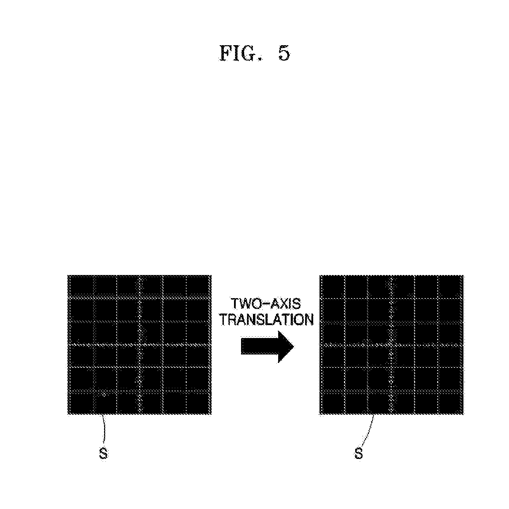

FIG. 5 illustrates that it is possible to adjust the position of a light spot S to the center of the main photodetector 15 just by using the translation of the optical path separator 25 along the X- and Y-axes.

According to the present invention, since tilt alignment about an optical axis for an optical path separator is completed before real products are assembled, optical alignment is accomplished only by using translation during the assembly. Therefore, the risk of breakage during assembly of optical elements is remarkably reduced. In addition, since an optical-axis alignment operation is simplified, a focusing, tracking, and/or tilt servo can be realized only by a main photodetector having a simple structure, e.g., a 4-division photodetector. Since an integrated optical system using optical-axis alignment according to the present invention can realize a servo by using a main photodetector having a simple structure, it is advantageous in terms of miniaturization and integralization.

An optical bench according to the present invention has an improved structure allowing a lens unit to be assembled just by mounting an optical path separator without provisionally bonding the optical path separator, thereby simplifying assembly processes. In addition, an integrated optical system according to the present invention uses an objective lens or a collimating lens as a lens unit and thus can be used as an optical pickup or a holographic module.

In an optical alignment method according to the present invention, since tilt alignment of main optical elements used in an integrate optical system is realized by setting jigs, tilt alignment is not needed during assembly of real optical elements and the assembly can be easily completed by using translation of an optical path separator along X- and Y-axes.

An integrated optical system according to the present invention is used for portable terminals such as personal digital assistants (PDAs), mobile phones, digital cameras, portable disc players, and camcorders and is very thin and small. Accordingly, optical elements used for the integrated optical system are much smaller and portions on which the optical elements are mounted have a thickness in μm unit. As a result, it is preferable that the optical elements are moved as little as possible for optical alignment. In the present invention, tilt alignment about an optical axis is performed by setting jigs before the integrated optical system is assembled, and therefore, the optical alignment can be accomplished only by using translation along X- and Y-axes without performing tilt alignment during the assembly of the integrated optical system.

Since optical alignment is simplified, the structure of a main photodetector can also be simplified. Conventionally, as the structure of the main photodetector gets simplified, an optical alignment operation becomes complicated. Conversely, as the structure of the main photodetector gets complicated, the optical alignment operation becomes simple. As a result, the main photodetector has been inevitably made to have a complicated structure to avoid a difficulty in the optical alignment. However, when the optical alignment can be easily accomplished according to the present invention, the structure of a photodetector can be simplified. Consequently, the size of an integrated optical system using the simplified photodetector is more reduced.

**Claims**

1. An optical alignment method for an integrated optical system, comprising:

   supporting an optical bench mounted with a lens unit with a first jig and adjusting a tilt of the optical bench using the first jig, thereby aligning the optical bench to an optical axis; and
   supporting a dummy optical path separator with a second jig and adjusting a tilt of the dummy optical path separator using the second jig, thereby preliminary aligning the dummy optical path separator to the optical axis, wherein the first jig and the second jig are set for tilt aligning of the integrated optical system.

2. The optical alignment method of claim 1, further comprising supporting a dummy disc with a third jig and adjusting a tilt of the dummy disc, thereby preliminary aligning the dummy disc to the optical axis.

3. The optical alignment method of claim 1 or 2, wherein the lens unit is an objective lens.

4. The optical alignment method of claim 1 or 2, wherein the lens unit is a collimating lens.

5. The optical alignment method of claim 1 or 2, wherein the lens unit is a hybrid lens comprising a refractive lens and diffractive lens.

6. The optical alignment method of any of claims 1 to 5, wherein the optical path separator is one of a holographic optical element and a diffractive optical element.

7. The optical alignment method of any of claims 1 to 6, further comprising:

   replacing the dummy optical path separator with an optical path separator to be assembled; and
   translating the optical path separator.

8. An optical bench adapted to have installed upon the optical bench a light source, a main photodetector receiving light reflected from a disc, a lens unit, and an optical path separator separating light coming from the light source and light coming from the lens unit,
   the optical bench comprising a landing recess which is open upward to receive the optical path separator therein and which has an aperture on a bottom thereof to pass light;
   **characterised in that** the optical bench is adapted to mount the lens unit above the landing recess and **in that** the landing recess allows mounting of the optical path separator after mounting of the lens and translation of the optical path separator along X and Y axes perpendicular to the upward direction.

9. The optical bench of claim 8, further comprising on a bottom surface thereof:

a first mirror arranged to change a direction of the light emitted from the light source toward the lens unit; and
a second mirror arranged to change a direction of light that has come from lens unit and then reflected from the first mirror toward the main photodetector.

**10.** An integrated optical system comprising:

a light source;
a main photodetector receiving light that is emitted from the light source and then reflected from a disc; and
an optical bench according to claim 8, wherein the light source and the main photodetector are on the optical bench,
a lens unit installed on the optical bench; and
an optical path separator separating a path of light advancing from the light source to the lens unit and a path of light advancing from the lens unit.

**11.** The integrated optical system of claim 10, wherein the lens unit is an objective lens.

**12.** The integrated optical system of claim 10 or 11, wherein the lens unit is a collimating lens.

**13.** The integrated optical system of claim 12, further comprising an objective lens above the collimating lens so that the integrated optical system is used as a holographic module.

**14.** The integrated optical system of any of claims 10 to 13, wherein the lens unit is a hybrid lens comprising a refractive lens and diffractive lens.

FIG. 1A

20

27

25

24

32 12

10

22

31

FIG. 1B

20

24

27

25

32 15 12 10 20a 23 22 31

FIG. 2

FIG. 3

FIG. 4A

FIG. 4B

FIG. 4C

FIG. 5

TWO-AXIS
TRANSLATION

S

S